# EUROPEAN PATENT APPLICATION

(11) **EP 3 379 476 A1**
(43) Date of publication of application: **26.09.2018**
(21) Application number: 18162558.3
(22) Date of filing: 19.03.2018
(51) Int. Cl.: G06Q 20/20, G06Q 20/18, G07G 1/00, G07G 1/01, G07G 1/12

(54) **REGISTER SYSTEM**

(30) Priority: 21.03.2017 JP 2017054689
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUGITA, Nobuhiro, Shinagawa-ku,, Tokyo 141-8562 (JP); GOTOU, Chikashi, Shinagawa-ku,, Tokyo 141-8562 (JP); KIKUCHI, Jun, Shinagawa-ku,, Tokyo 141-8562 (JP); MIYAZAKI, Jun, Shinagawa-ku,, Tokyo 141-8562 (JP); HIRAMATSU, Kenya, Shinagawa-ku,, Tokyo 141-8562 (JP)
(74) Representative: Takeuchi, Maya

(57) **Abstract**

A register system includes a display screen and a communication interface connectable to a settlement processing apparatus at which a payment process associated with a commodity sales transaction can be performed. A processor is configured to receive data from the settlement processing apparatus indicating a current stage of the payment process as one of a plurality of predetermined possible stages in the payment process. The processor controls the display screen to display a settlement process state image for indicating the current stage of the payment process. The settlement process state image includes image regions corresponding to each of the predetermined possible stages in the payment process. The processor changes a display format of an image region corresponding to the current stage of the payment process according to the received data from the settlement processing apparatus.

## Description

### FIELD

The present invention relates to the field of a retail transaction accounting system in general, and embodiments described herein relate in particular to a register system.

### BACKGROUND

In a retail transaction accounting system, such as a cash register or a checkout system, used in a supermarket or the like, a sales processing apparatus called a Point of Sale (POS) terminal is widely used. In a sales processing apparatus, registration of a commodity being purchased and the payment/settlement process are executed in accordance with an operation of a store clerk or the like.

However, in recent years, a checkout system, sometimes referred to as semi-self-service checkout system, have been developed in which a commodity registration apparatus operated by a store employee and accounting settlement apparatus operated by a customer based on the sales transaction information generated by the registration apparatus. In the semi-self service checkout system, it remains necessary for the employee operating the registration apparatus to also manage the settlement apparatus and to respond to customer actions entered using the settlement apparatus. Therefore, the system in the related art transmits information indicating an operation state of the settlement apparatus, such as completion of the settlement processing on the settlement apparatus by the customer to the registration apparatus, and then notifying the employee of the state by displaying a message or the like on the registration apparatus.

When the notification of operation state for the employee is generated in the settlement apparatus, the state of the settlement apparatus is displayed on the settlement apparatus when the registration apparatus is notified. Therefore, it is difficult to notify an operation state other than a predetermined operation state such as processing completion. That is, it is difficult for the store clerk to grasp intuitively and easily determine at which particular processing stage in the entire processing the customer is presently performing on the settlement apparatus. For example, when the processing by the customer for the settlement process appears long, the employee cannot easily determined the time has actually elapsed and has to arbitrarily judge the present state of the customer processing.

To solve such problem, there is provided a register system comprising: a display screen; a communication interface connectable to a settlement processing apparatus at which a payment process associated with a commodity sales transaction can be performed; and a processor configured to: receive data via the communication interface from the settlement processing apparatus indicating a current stage of the payment process on the settlement processing apparatus as one of a plurality of predetermined possible stages in the payment process; control the display screen to display a settlement process state image for indicating the current stage of the payment process on the settlement processing apparatus, the settlement process state image including image regions corresponding to each of the predetermined possible stages in the payment process; and change a display format on the display screen of an image region corresponding to one of the predetermined possible stages in the payment process matching the current stage of the payment process according to the received data from the settlement processing apparatus.

Preferably, the system further comprises: a commodity scanner for registering items in the commodity sales transaction; and a clerk data input unit including a keyboard and a touch panel, the clerk data input unit being configured to permit a sales clerk to input information related to the commodity sales transaction.

Preferably still, the display format on the display screen of the image region is a display color.

Preferably yet, the processor is further configured to track an elapsed time from a beginning of at least one of the predetermined possible stages in the payment process according to data received from the settlement processing apparatus and to display the elapsed time on the display screen.

Suitably, the processor is further configured to control the display screen to display a warning image when the elapsed time exceeds a threshold value.

Suitably still, the communication interface is connected to a plurality of settlement processing apparatuses, the processor is configured to receive data, via the communication interface, from each settlement processing apparatus in the plurality, and the processor is configured to control the display screen to display a settlement process state image corresponding to each settlement processing apparatus.

Suitably yet, the processor is further configured to: receive inventory state data from the settlement processing apparatus, the inventory state data indicating at least one of a remaining amount of a banknote denomination within the settlement processing apparatus, a remaining amount of a coin denomination within the settlement processing apparatus, and a remaining amount of paper in a receipt printer of the settlement processing apparatus, and control the display screen to display a screen image according to the inventory state data along with the settlement process state image for the settlement processing apparatus.

The invention also relates to a retail store checkout system, comprising: a sales registration apparatus including a commodity scanner for registering items in a sales transaction, a display screen for displaying information associated with the sales transaction to sales clerk, and a communication interface; and a plurality of settlement processing apparatuses connected to the sales registration apparatus via the communication interface, each settlement processing apparatus being configured to receive sales transaction data from the sales registration apparatus and process payments from a customer for settlement of the sales transaction, wherein the sales registration apparatus is configured to: receive data via the communication interface from each settlement processing apparatus, the data indicating a current stage of the payment process on the settlement processing apparatus as one of a plurality of predetermined possible stages in the payment process; control the display screen to display a settlement process state image for each settlement processing apparatus, the settlement process state image for each settlement processing apparatus indicating the current stage of the payment process on the respective settlement processing apparatus, each settlement process state image including image regions corresponding to each of the predetermined possible stages in the payment process; and change a display format on the display screen of an image region corresponding to one of the predetermined possible stages in the payment process matching the current stage of the payment process according to the received data from each settlement processing apparatus.

Preferably, the display format on the screen of the image region is a display color.

Preferably still, the sales registration apparatus is further configured to track an elapsed time from a beginning of at least one of the predetermined possible stages in the payment process according to data received from the settlement processing apparatus and to display the elapsed time on the display screen.

Preferably yet, the sales registration apparatus is further configured to control the display screen to display a warning image when the elapsed time exceeds a threshold value.

Suitably, the sales registration apparatus is further configured to: receive inventory state data from each settlement processing apparatus, the inventory state data indicating at least one of a remaining amount of a banknote denomination within the settlement processing apparatus, a remaining amount of a coin denomination within the settlement processing apparatus, and a remaining amount of paper in a receipt printer of the settlement processing apparatus, and control the display screen to display a screen image according to the inventory state data along with the settlement process state image for each settlement processing apparatus.

The invention further relate to a register machine for a retail store checkout system that includes a plurality of customer-operated settlement processing apparatuses, the sales registration apparatus comprising: a commodity scanner for registering items in a commodity sales transaction; a clerk data input unit including a keyboard and a touch panel, the clerk data input unit being configured to permit a sales clerk to input information related to the commodity sales transaction; a display screen for displaying information to the sales clerk that is associated with the commodity sales transaction; a communication interface connected to a plurality of settlement processing apparatuses at which a payment process associated with the commodity sales transaction can be performed by a customer; and a processor configured to: receive data, via the communication interface, from each settlement processing apparatus, the data indicating a current stage of the payment process on the settlement processing apparatus as one of a plurality of predetermined possible stages in the payment process; control the display screen to display a settlement process state image for indicating the current stage of the payment process on the settlement processing apparatus, the settlement process state image including image regions corresponding to each of the predetermined possible stages in the payment process; and change a display format on the display screen of an image region corresponding to one of the predetermined possible stages in the payment process matching the current stage of the payment process according to the received data from the settlement processing apparatus.

Preferably, the display format on the display screen of the image region is a display color.

Preferably still, the processor is further configured to track an elapsed time from a beginning of at least one of the predetermined possible stages in the payment process according to data received from the settlement processing apparatus and to display the elapsed time on the display screen.

Preferably yet, the processor is further configured to control the display screen to display a warning image when the elapsed time exceeds a threshold value.

Suitably, the processor is further configured to: receive inventory state data from each settlement processing apparatus, the inventory state data indicating at least one of a remaining amount of a banknote denomination within the settlement processing apparatus, a remaining amount of a coin denomination within the settlement processing apparatus, and a remaining amount of paper in a receipt printer of the settlement processing apparatus, and control the display screen to display a screen image according to the inventory state data along with the settlement process state image for the respective settlement processing apparatus.

The invention also concerns a method for displaying a stage of a payment process on a settlement processing apparatus in a registration apparatus comprising steps of: detecting, by the registration apparatus, that a subtotal button on the settlement processing apparatus is pressed, transmitting, by the registration apparatus, transaction information to the settlement processing apparatus, starting, by the registration apparatus, a measurement of a standby time from the transmission of the transaction information until an operation is started in the settlement apparatus, and displaying a figure, on the registration apparatus, to display that the stage is in the standby state until the standby time exceed a preset value.

The invention further concerns a recording medium storing a program causing a computer to execute the method.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a plan view illustrating an arrangement of a registration apparatus and a plurality of the accounting apparatuses in a semi-self service checkout system of an embodiment.
FIG. 2 is a perspective view illustrating an example of an appearance of the registration apparatus in the embodiment.
FIG. 3 is a view illustrating an example of a combination keyboard in the embodiment.
FIG. 4 is a block diagram illustrating a configuration of the registration apparatus and the accounting apparatus in the embodiment.
FIG. 5 is a view illustrating an example of a state transition image displayed on a touch panel in the embodiment.
FIG. 6 is a flowchart for explaining a process for displaying the state transition image of the registration apparatus in the embodiment.
FIG. 7 is a flowchart of aspects of a process for displaying the state transition image of the registration apparatus in the embodiment.
FIG. 8 is a flowchart of aspects of a process for displaying the state transition image of the registration apparatus in the embodiment.
FIG. 9 is a flowchart of aspects of a process of the accounting apparatus in the embodiment.
FIGs. 10A to 10E are views illustrating an example of a display form of a state image in the embodiment.

### DETAILED DESCRIPTION

In general, according to an embodiment, a register system includes a display screen, a communication interface connectable to a settlement processing apparatus at which a payment process associated with a commodity sales transaction can be performed, and a processor. The processor is configured to receive data via the communication interface from the settlement processing apparatus indicating a current stage of the payment process on the settlement processing apparatus as one of a plurality of predetermined possible stages in the payment process, control the display screen to display a settlement process state image for indicating the current stage of the payment process on the settlement processing apparatus, the settlement process state image including image regions corresponding to each of the predetermined possible stages in the payment process, and change a display format on the display screen of an image region corresponding to one of the predetermined possible stages in the payment process matching the current stage of the payment process according to the received data from the settlement processing apparatus.

Hereinafter, an example embodiment will be described with reference to the drawings. The checkout system in the example embodiment is installed in, for example, a shop or retail location such as a supermarket. In the following description, it is assumed that a semi-self service checkout system is used. That is, the checkout system uses customer actions/operations for aspects of the sales transaction registration/settlement. Here, the semi-self service checkout system is provided with a product registration apparatus, which executes a registration process in which an employee operates the product registration apparatus, and payment settlement apparatus, which executes a settlement process in which the customer primarily controls the settlement apparatus.

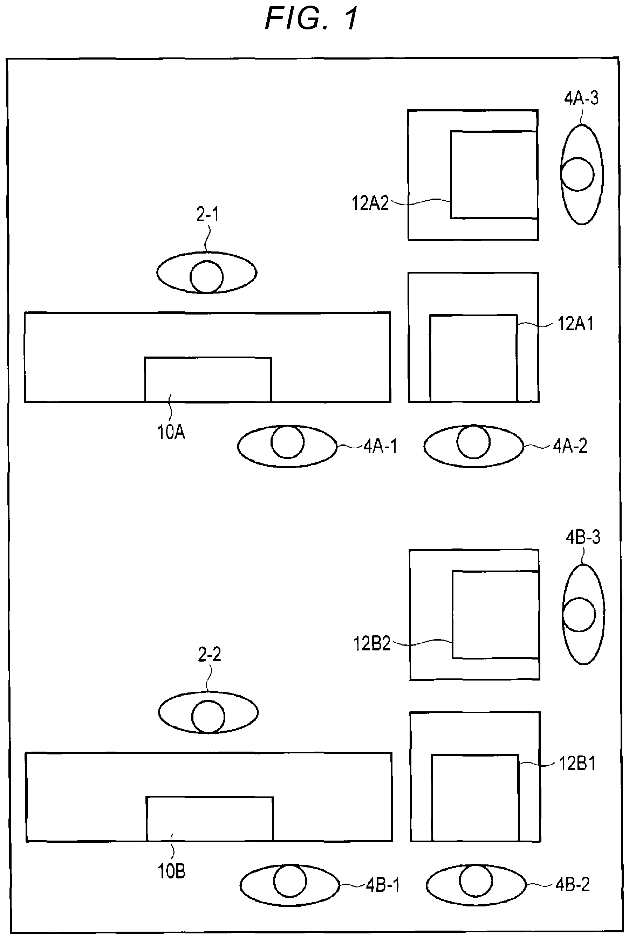

FIG. 1 is an overhead, plan view illustrating a semi-self service checkout system according to an embodiment. FIG. 1 depicts an arrangement of a plurality of registration apparatuses 10, in particular, a registration apparatus 10A and a registration apparatus 10B and a plurality of accounting apparatuses 12, in particular, accounting apparatuses 12A1, 12A2, 12B1, and 12B2. In some contexts, the accounting apparatuses 12 may be referred to as settlement processing apparatuses or customer operated settlement processing apparatuses. The checkout system illustrated in FIG. 1 is provided with two registration apparatuses 10A and 10B. Two accounting apparatuses 12A1 and 12A2, which execute a settlement process based on transaction information generated in the registration apparatus 10A, are provided in the vicinity of the registration apparatus 10A. Similarly, two accounting apparatuses 12B1 and 12B2, which execute a settlement process based on transaction information generated in the registration apparatus 10B, are provided in the vicinity of the registration apparatus 10B.

The registration apparatus 10A receives a commodity code of a commodity being purchased by a shopper 4, such as shopper 4A-1, and generates the transaction information used for a settlement process in the accounting apparatus 12 based on the commodity code. The transaction information includes information on at least one commodity and an amount of money required to settle the sales transaction. The registration apparatus 10A is operated by an employee 2-1 who performs a commodity registration operation, and may be called a checker or a checkout clerk. The registration apparatus 10A may include functionality permitting the checker to perform the same-type settlement processing operations as any of the accounting apparatuses 12, if necessary.

The accounting apparatuses 12A1 and 12A2 receive transaction information generated by the registration apparatus 10A and permits performance of the settlement processing based on the transaction information. The accounting apparatuses 12A1 and 12A2 are to be operated by certain shoppers 4 (e.g., shopper 4A-2 and shopper 4A-3, respectively). In FIG. 1, an example in which two accounting apparatuses 12A1 and 12A2 are provided is illustrated. However, in other examples, three or more accounting apparatuses 12 may be provided.

Similar to the registration apparatus 10A, the registration apparatus 10B registers a commodity being purchased by a shopper 4, in particular here, shopper4B-1 and generates transaction information. The registration apparatus 10B is operated by an employee 2-2, also referred to as a checker, checkout clerk, or a sales clerk. In general, the registration apparatus 10B has functionality for performing the same settlement processing as might otherwise be carried out on the accounting apparatus 12 based on the transaction information.

The accounting apparatuses 12B1 and 12B2 receive the transaction information generated by the registration apparatus 10B and perform the settlement processing based on the transaction information. In this example, the accounting apparatuses 12B1 and 12B2 are operated by the shopper 4B-2 and the shopper 4B-3, respectively.

The checkout system according to this disclosure is not limited to in the number of the registration apparatuses 10 that might be provided at the retail location. Also, although for the transaction information generated by a particular registration apparatus 10 is supplied ton an accounting apparatus 12 provided in the vicinity of the particular registration apparatus 10, in other examples, the settlement process may be executed in the accounting apparatus 12 provided at distance from the particular registration apparatus. For example, the transaction information generated by the registration apparatus 10A may be sent for settlement processing to the accounting apparatus 12B1 or the accounting apparatus 12B2.

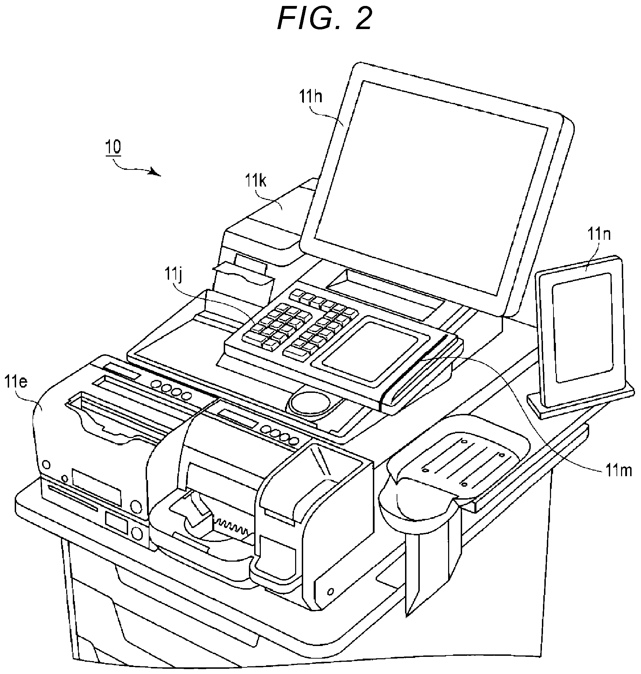

FIG. 2 is a perspective view illustrating an example of an appearance of a registration apparatus 10 in the embodiment.

As illustrated in FIG. 2, the registration apparatus 10 is provided with a change machine 11e, a touch panel 11h, a combination keyboard 11j, which includes a keyboard 11ja and a touch panel 11jb, a printer 11k, a card reader/writer 11m, and a side display 11n.

The registration apparatus 10 can be formed such that the touch panel 11h, the combination keyboard 11j, the printer 11k, and the side display 11n are detachably mounted on a housing or casing. Therefore, the touch panel 11h, the combination keyboard 11j, the printer 11k, and the display 11n may be selected and mounted according to what is considered suitable for use at a particular shop or retail location. In addition, some mounted components may be optional depending on the shop or retail location.

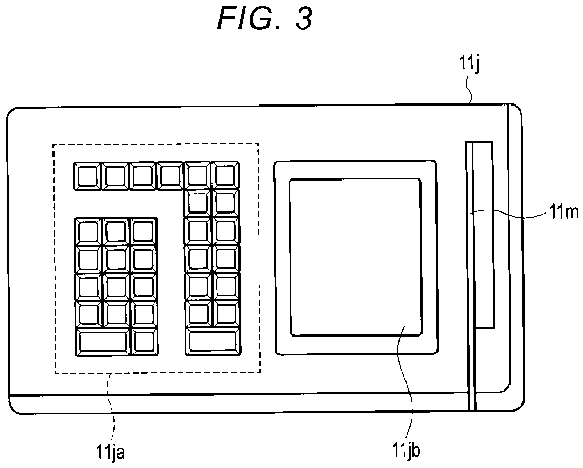

For example, as illustrated in FIGS. 2 and 3, the combination keyboard 11j has a form in which the keyboard 11ja and the touch panel 11jb are provided together; however, in other examples, a keyboard on which only keys are provided rather than inclusion of the touch panel 11jb, can be adopted. Also, a format in which input operations of the employee 2 are provided only from the touch panel 11h without the mounting or inclusion of the combination keyboard 11j is possible. In the example, it is assumed that the combination keyboard 11j (provided with the keyboard 11ja and the touch panel 11jb) illustrated in FIG. 3 is provided.

Similarly, the side display 11n is used as a customer viewing panel for providing information to the customer and it is possible to select and mount any one of a plurality of possible units having different screen sizes. Likewise, a touch panel may be mounted instead of the side display 11n so as to receive an input operation from the customer.

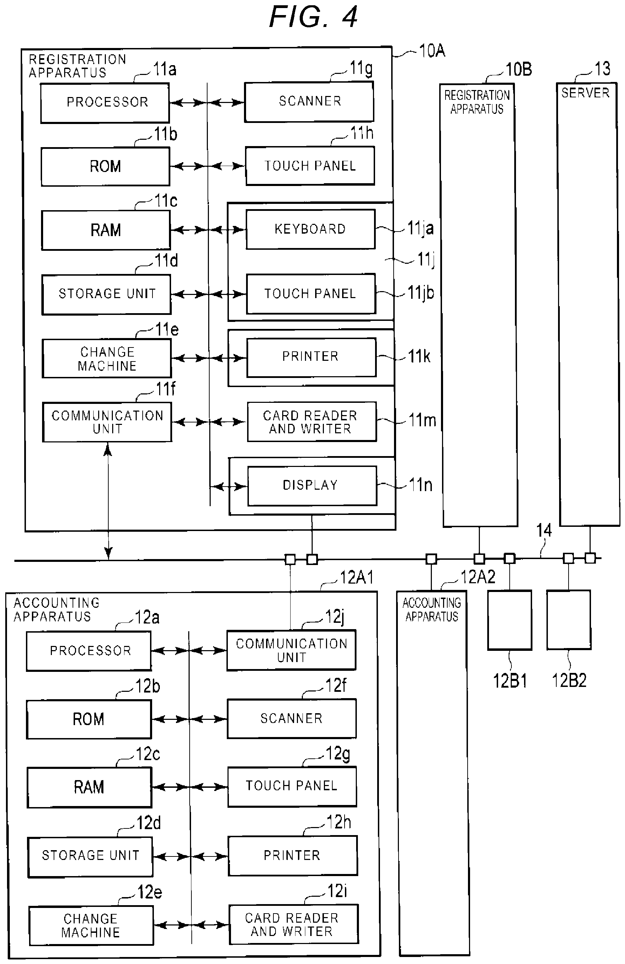

FIG. 4 is a block diagram illustrating a configuration of a registration apparatus 10A and an accounting apparatus 12A1 in an embodiment. In general, the registration apparatus 10B has the same configuration as that of the registration apparatus 10 and a detailed description thereof will be omitted. The accounting apparatuses 12A2, 12B1, and 12B2 each have the same configuration as that of the accounting apparatus 12A1 and a detailed description thereof will be omitted.

The registration apparatus 10A is equipped with a computer and includes a processor 11a, such as a central processing unit (CPU) or the like, a read-only memory (ROM) 11b, a random-access memory (RAM) 11c, a storage unit 11d, the change machine 11e, a communication unit 11f, a scanner 11g, the touch panel 11h, the combination keyboard 11j (keyboard 11ja and touch panel 11jb), the printer 11k, the card reader and writer 11m, and the display 11n.

The processor 11a is an integrated circuit or the like for controlling each structural sub-unit to realize disclosed functional aspects of a registration apparatus 10 based on an operating system, middleware, and/or an application program stored in the ROM 11b or the RAM 11c.

The ROM 11b and the RAM 11c store various programs executed by the processor 11a as well as data to be referred to when the processor 11a performs various processes. For example, in the RAM 11c, a registered commodity table in which information about a commodity being purchased by a customer is recorded when the process of registering the commodity is executed.

The program executed by the processor 11a includes a control program for executing a process of inputting information (commodity code or the like) through the scanner 11g, a process of generating transaction information used for a settlement process according to information in the registered commodity table, a settlement process based on the transaction information, or the like. The program executed by the processor 11a further includes a display control method for displaying a screen indicating a current processing status of the settlement process executed in the accounting apparatus 12. A processor 11a executes a display control method to receive data indicating a current processing status in the various processing stages included in the settlement process from the accounting apparatus 12; display a state transition image indicating the processing stages; change a display format according to the current processing status; and to receive state data indicating a remaining amount of a banknote or coin in the change machine of the accounting apparatus 12, or a remaining amount of a paper in the printer provided in the accounting apparatus 12.

The storage unit 11d stores data used by the processor 11a for performing various processes and data generated by the processor 11a. As the storage unit 11d, for example, an electronic erasable programmable read only memory (EEPROM), a hard disk drive (HDD), a solid state drive (SSD), or the like can be used.

The change machine 11e is a device that receives deposits and payments or the like, receives coins and banknotes from the employee 2, and dispenses coins and banknote as a change as necessary.

The communication unit 11f performs communication with the registration apparatus 10B, the plurality of the accounting apparatuses 12, a server 13 via, for example, a local area network (LAN) 14.

The scanner 11g reads information for the commodity by, for example, optical scanning and inputs a commodity code unique to the commodity. The scanner 11g may be a fixed type or a hand-held barcode-type code scanner or alternatively may identify the commodity by using an image recognition technique on a captured image of the commodity. For the scanner 11g, one type may be provided or a plurality of types may be provided.

The touch panel 11h includes a display device and a touch sensor. The display device displays an arbitrary screen, such as a Graphical User Interface (GUI) screen. For example, the display device displays a registration screen, such as commodity list screen, including a list of the transaction information, such as commodity name, amount of money, or the like, relating to a commodity registered as part of the sales transaction, a subtotal amount, various menus, and a button for inputting a command, and the like. As the display device, for example, a well-known device such as a color Liquid Crystal Display (LCD) can be used. The touch sensor is disposed to overlap a display surface of the display device. The touch sensor detects a touched position on the display surface of the display device and sends position information to the processor 11a. As the touch sensor, a well-known device can be used.

The combination keyboard 11j is a device by which an input operation can be performed by the employee and includes, for example, the keyboard 11ja and the touch panel 11jb in which a plurality of keys, to which specific functions have been assigned individually, are arranged. For example, the touch panel 11jb has the same configuration as that of the touch panel 11h. The touch panel 11jb displays supplementary information that does not need to be displayed at all times, special sale information, a message from a store manager, or the like to be primarily shared to the employees 2 in the store, or the like. In the touch panel 11jb, it is possible to display a screen not directly related to a check job executed by operating the touch panel 11h. Therefore, in the touch panel 11jb, it is possible for an employee 2 to continuously monitor the processing stages being executed on the accounting apparatus 12, for example, by displaying a state transition image indicating the particular processing status of the accounting apparatus 12.

The printer 11k is, for example, a thermal printer, a dot impact printer, or the like, and issues a transaction receipt including transaction content such as a commodity name, a unit price, or a total price is printed as various character strings, images, code patterns (e.g., barcodes, other two-dimensional codes, and the like.

The card reader/writer 11m reads data recorded on a card and writes data to the card. In this context "a card" includes various card types available for recording information relating to the settlement process, such as a membership card and a reward points card, in addition to a payment settlement card such as a credit card, a debit card, an electronic money card, or a prepaid card. The card reader/writer 11m may be any of a magnetic type, a contact type, and a non-contact type, or may include a plurality of types of these devices.

The side display 11n can be a well-known device such as a color LCD panel.

The accounting apparatus 12A1 is equipped with a computer function and includes a processor 12a, such as a central processor or the like, a read-only memory (ROM) 12b, a random-access memory (RAM) 12c, a storage unit 12d, a change machine 12e, a communication unit 12j, a scanner 12f, a touch panel 12g, a printer 12h, and a card reader and writer 12i. Each unit provided in the accounting apparatus 12A1 has the same function as that of each unit of the registration apparatus 10A and a detailed description thereof will be omitted.

The processor 12a executes a settlement process based on the transaction information generated by the registration process of the registration apparatus 10A based on a settlement process program stored in the ROM 12b or the RAM 12c. In the settlement process, data indicating the current processing stage is transmitted to the registration apparatus 10A. The processor 12a transmits state data indicating inventory data to the accounting apparatus 12A1. The inventory data indicates the remaining amount of banknotes and/or coins in the change machine 12e or a remaining amount of paper in the printer 12h.

The change machine 12e can detect the current inventory of the stored banknotes and coins. The change machine 12e is provided with, for example, a banknote storage unit and a coin storage unit. The banknote storage unit includes a banknote storage box for each of denominations, detects when a banknote is inserted into or discharged from each banknote storage box by a sensor, and counts the number of the banknotes stored in the banknote storage box for each of the denomination. The coin storage unit includes a coin storage box for each of available denomination, detects when a coin is inserted into each coin storage box by a sensor, and counts the number of coins stored in each coin storage box.

The change machine 12e can transmit its inventory data to the processor 12a at a predetermined transmission timing.

It is also possible to transmit not only the banknote and loose coin inventory data, but also inventory indicating the current inventory of a coin package (i.e., coin-roll) stored in a coin-roll storage apparatus of the change machine 12e. The inventory data of the coin-roll indicates, for example, an inventory level of each of a plurality of coin denominations.

In the printer 12h, a roll of paper is stored and as a necessary the paper is unrolled for printing a sales transaction receipt, then cut and discharged. The printer 12h is provided with a capability of detecting the remaining amount of paper on the roll or otherwise provided. For example, the printer 12h is provided with a remaining amount sensor that detects that the paper has reached a predetermined remaining amount (e.g., a near-empty state) and can transmit the remaining amount data as detected by the remaining amount sensor to the processor 12a.

The server 13 is a store server that manages the entire checkout system. The server 13 includes, for example, a processor, a ROM, a RAM, a storage unit, a communication unit, a display, a keyboard, and a printer. Similar to the accounting apparatus 12A1, the processor of the server 13 can be configured to realize functions of a receiving unit, a display unit, a change unit, a state data receiving unit by executing a stored display control method. The server 13 receives data indicating the current processing status from the accounting apparatus 12 through the LAN 14 and can display a state transition image indicating the processing status of the accounting apparatus 12 based on the data.

Next, an operation of the registration apparatus 10A as a commodity sales data processing apparatus according to an embodiment will be described.

When the registration apparatus 10A is in a mode in which a registration process of a commodity being can be performed, a control process is started based on a control program stored in the ROM 11b or the storage unit 11d by the processor 11a.

When the control process is started, the processor 11a clears the registered commodity table stored in the RAM 11c and displays a registration screen on the touch panel 11h. The registration screen is provided to display information of the commodity registered in the registered commodity table or the like and is a screen for allowing the employee 2 to confirm an execution status of the registration process.

When the processor 11a displays the state transition image indicating the processing status of the accounting apparatuses 12A and 12B on the touch panel 11jb, the processor 11a begins a state image display process based on the display control method stored in the ROM 11b or the storage unit 11d. When the processor 11a starts the state image display process, the processor 11a displays the state transition image on the touch panel 11jb. When the state transition image is not being displayed on the touch panel 11jb, the processor 11a displays supplementary information that does not need to be displayed at all times, such as special sale information, a message from a store manager, or the like, for the employees 2 in the store as necessary. In this case, when confirmation of the operation status of the accounting apparatus 12 is necessary, the employee 2 instructs the display of the state transition image by a predetermined input operation, such as pressing of a button or keystrokes, with respect to the registration apparatus 10A. The processor 11a executes the state image display process according to the input operation by the employee 2 and displays the state transition image on the touch panel 11jb.

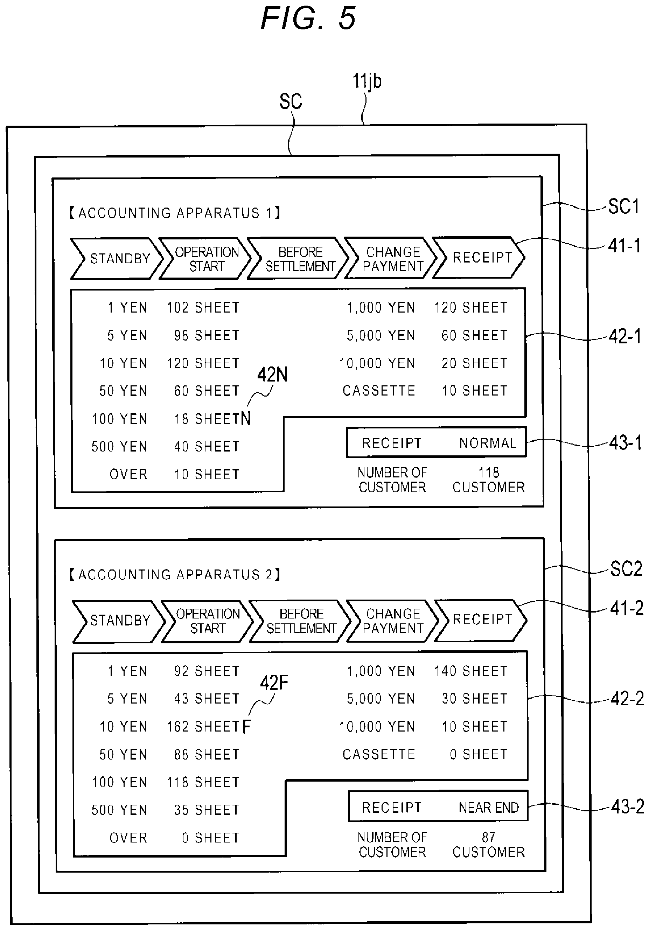

FIG. 5 is a view illustrating an example of a state transition image SC displayed on the touch panel 11jb in the embodiment.

The state transition image SC illustrated in FIG. 5 includes a first state transition image SC1, indicating the processing status of the accounting apparatus 12A1, and a second state transition image SC2, indicating the processing status of the accounting apparatus 12A2.

In FIG. 5, the first state transition image SC1 and the second state transition image SC2 corresponding to the plurality of the accounting apparatuses 12A1 and 12A2 are displayed on one screen, but in other examples each of the first state transition image SC1 and the second state transition image SC2 may be displayed on a different screen. In this case, the processor 11a switches the first state transition image SC1 and the second state transition image SC2 to an individually displaying screen, for example, according to a predetermined operation of the employee 2. Not only the state transition image corresponding to the accounting apparatuses 12A1 and 12A2 disposed in the vicinity of the registration apparatus 10A, but also the state transition image corresponding to the accounting apparatuses 12B1 and 12B2 disposed in the vicinity of the other registration apparatus 10B may be displayed. Since the touch panel 11jb is provided independently of the touch panel 11h in this example, the registration screen is not hidden by the displaying of the state transition image so it does not hinder the registration process or the like.

The first state transition image SC1 illustrated in FIG. 5 includes a state image 41-1 for displaying the present processing stage of the accounting apparatus 12A1, an inventory display image 42-1 for displaying the present inventory of the banknotes and coins stored in the change machine 12e of the accounting apparatus 12A1, and a remaining amount displaying image 43-1 for displaying the remaining amount of the receipt paper in the printer 12h of the accounting apparatus 12A1.

The state image 41-1 indicates the current stage in the processing by reference to operation state transitions from among the plurality of processing stages, based on data indicating the current processing status that has been received from the accounting apparatus 12A1. The plurality of the processing stages executed by the accounting apparatus 12A1 includes, for example, a case where there are five possible stages: "standby", "operation start", "before settlement", "change payment", and "receipt". In FIG. 5, each of the plurality of the processing stages is displayed by a symbol or graphic region and letters within the symbol or graphic region. In general, so long as the employee 2 can easily monitor the state transitions, any other graphic display form such as still images, moving images, or only words or letters may be adopted. Furthermore, the possible processing stages of the accounting apparatus 12A1 is not limited to the above description.

The inventory display image 42-1 and the remaining amount displaying image 43-1 are displayed based on the state data indicating the status of the change machine 12e and the printer 12h received from the accounting apparatus 12A1.

The inventory display image 42-1 represents the inventory of various denominations of the banknote and coins stored in the change machine 12e, for example, by the number of units (e.g., sheets). In the inventory display image 42-1, when the inventory is less than a preset number of the units, a near empty display "N" 42N is added next to each of the denominations having less than the preset number. If the inventory exceeds a preset maximum number above which the change machine 12e is not capable of storing (or some otherwise arbitrary maximum value), a full display "F" ("F" 42F indicated in the second state transition image SC2) is added next to each of the denominations exceeding the preset maximum number.

The remaining amount displaying image 43-1 represents the remaining amount of the receipt paper stored in the printer 12h. In the embodiment, for example, "normal" in which the remaining amount is deemed sufficient for normal operations, "near end" in which the remaining amount is equal to or less than some preset value, and "no remaining amount" in which there is no receipt paper left can be displayed.

The second state transition image SC2 illustrated in FIG. 5 includes a state image 41-2 for displaying the processing stage of the accounting apparatus 12A2, an inventory display image 42-2 for displaying the inventory of the banknote and coins stored in the change machine 12e of the accounting apparatus 12A2, and a remaining amount display image 43-2 for displaying the remaining amount of the receipt paper stored in the printer of the accounting apparatus 12A2. The second state transition image SC2 is displayed in the same manner as the first state transition image SC1 and a detailed description thereof will be omitted.

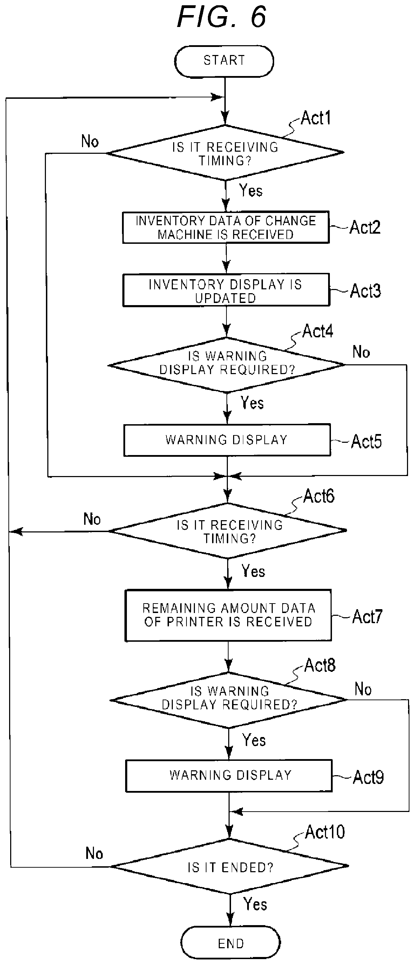

FIG. 6 is a flowchart for explaining a process for displaying the state transition image SC, including an inventory display image and a remaining amount display image, of the registration apparatus 10A. Here, the display of the inventory display image 42-1 and the remaining amount displaying image 43-1 of the first state transition image SC1 corresponding to the accounting apparatus 12A1 is described as an example. The second state transition image SC2, including the inventory display image 42-2 and the remaining amount display image 43-2, corresponding to the accounting apparatus 12A2 also executes substantially the same process and the description thereof will be omitted.

When it is time to receive the inventory data of the change machine 12e from the accounting apparatus 12A1 (Act 1, Yes), the processor 11a receives the inventory data of the change machine 12e from the accounting apparatus 12A1. The inventory data includes data indicating banknote and coin inventory levels for each of the various denominations. As the timing, for example, a request for transmitting the inventory data of the change machine 12e may be issued from the registration apparatus 10A at a predetermined time, or the processor 12a of the accounting apparatus 12A1 acquires the inventory data from the change machine 12e at a predetermined time interval and may transmit the acquired inventory data to the registration apparatus 10A. When there is a preset status change condition in the change machine 12e that is met, such as the stored amount of money decreases by a certain amount or below a preset level, the accounting apparatus 12A1 can acquire the inventory data from the change machine 12e and transmits the inventory data to the registration apparatus 10A.

When the processor 11a receives the inventory data of the change machine 12e from the accounting apparatus 12A1 (Act 2), the display content of the inventory display image 42-1 of the state transition image SC displayed in the touch panel 11jb is updated (Act 3).

Here, when it is determined that a warning display is necessary based on the inventory data (e.g., at least one denomination is near empty or full), the processor 11a adds a display (near empty display "N", or full display "F") indicating the warning. For example, in the example illustrated in FIG. 5, since 100 yen coin is in the near empty state, "N" 42 is added to the number display "18 sheets" of the 100 yen coin. When there is the warning display, the display form is changed to a form different from ordinary, for example, a background color is changed to a color indicating a warning so that the employee 2 can easily recognize the warning display.

When it is time to receive the remaining amount data of the printer 11k from the accounting apparatus 12A1 (Act 6, Yes), the processor 11a receives the remaining amount data of the printer 11k transmitted from the accounting apparatus 12A1. The remaining amount data indicates the remaining amount of the receipt paper stored in the printer 11k and, for example, any of "normal" in which the remaining amount is deemed sufficient, "near end" in which the remaining amount is equal to or less than a preset value, and "no remaining amount" in which there is no receipt paper may be indicated. As the reception timing, for example, a request for transmitting the remaining amount data of the printer 11k with respect to the accounting apparatus 12A1 may be issued from the registration apparatus 10A for a predetermined time, or the processor 12a of the accounting apparatus 12A1 acquires the remaining amount data from the printer 11k for predetermined time intervals and may transmit the remaining amount data to the registration apparatus 10A. Also, when there is a preset status change condition in the remaining amount in the printer 11k, such as a decrease in remaining amount below a preset threshold value, the accounting apparatus 12A1 can acquire the remaining amount data from the printer 11k and transmit the remaining amount data to the registration apparatus 10A.

A notification (e.g., a warning) can be provided to the employee 2 when the receipt paper of the printer 12h is in the "near end" or the "no remaining amount" conditions, and the accounting apparatus 12A1 may receive the remaining amount data only when the receipt paper is in the "near end" or the "no remaining amount" state.

When the processor 11a receives the remaining amount data of the printer 11k from the accounting apparatus 12A1 (Act 7), the processor 11a determines whether or not the remaining amount data indicates that a warning display of the "near end" or the "no remaining amount" is required. Here, when it is determined that the warning display is required (Act 8, Yes), the processor 11a changes the display of the remaining amount displaying image 43-1 to the "near end" or the "no remaining amount" as indicated by the remaining amount data. When the warning display is performed, the display form is changed to a form different from ordinary, for example, the background color is changed to the color indicating a warning, so that the employee 2 can easily recognize the warning display.

The timing (Act 1) for receiving the inventory data of the change machine 12e from the accounting apparatus 12A1 and the timing (Act 6) for receiving the remaining amount data of the printer 12h may be the same, or may be different timing from each other.

In the above description, the state transition image is displayed on the touch panel 11jb, but may also or instead be displayed in the touch panel 11h. For example, when a screen displayed on the touch panel 11h is not used, such as when the registration process is not being performed, or the like, the state transition image is displayed on the touch panel 11h according to the instruction by the input operation of the employee 2.

In this manner, in the inventory display image 42-1 and the remaining amount displaying image 43-1 of the state transition image SC (first state transition image SC1), it is possible to display the inventory of the banknote and coins stored in the change machine 12e of the accounting apparatus 12A1 and also the remaining amount of the receipt paper stored in the printer 12h. Therefore, the employee 2 can simultaneously monitor the state of the change machine 12e and the printer 12h from the first state transition image SC1. Therefore, it is unnecessary to individually respond to a status requiring replenishment work in each of the change machine 12e and the printer 12h, and it is possible to efficiently execute the replenishment work with respect to the change machine 12e and the printer 12h. Similarly, in the inventory display image 42-2 and the remaining amount display image 43-2 of the second state transition image SC2, it is possible to display the inventory of the banknote and coins stored in the change machine and the remaining amount of the receipt paper stored in the printer of the accounting apparatus 12A2. Therefore, it is possible to monitor the inventory and the remaining amount of the receipt paper of a plurality of the accounting apparatuses 12A1 and 12A2 at the same time, and to improve the efficiency of the replenishment operation.

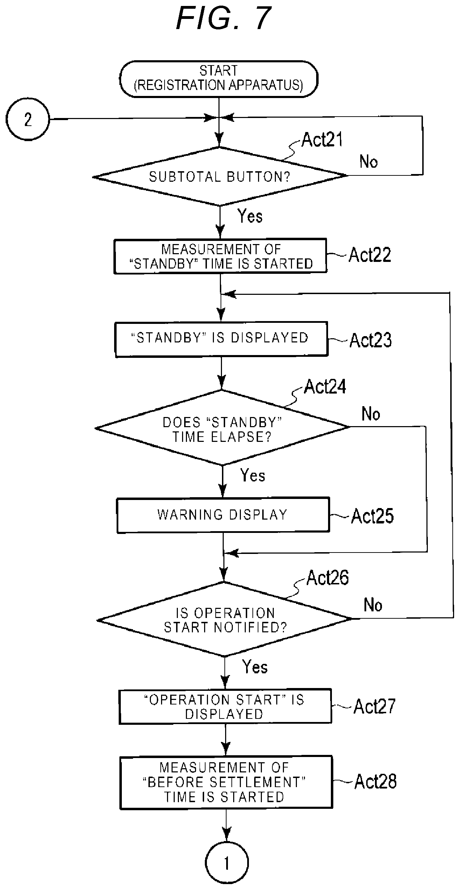

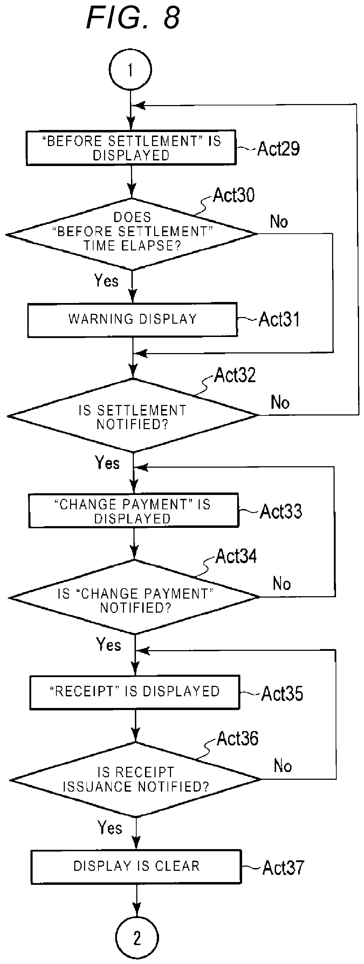

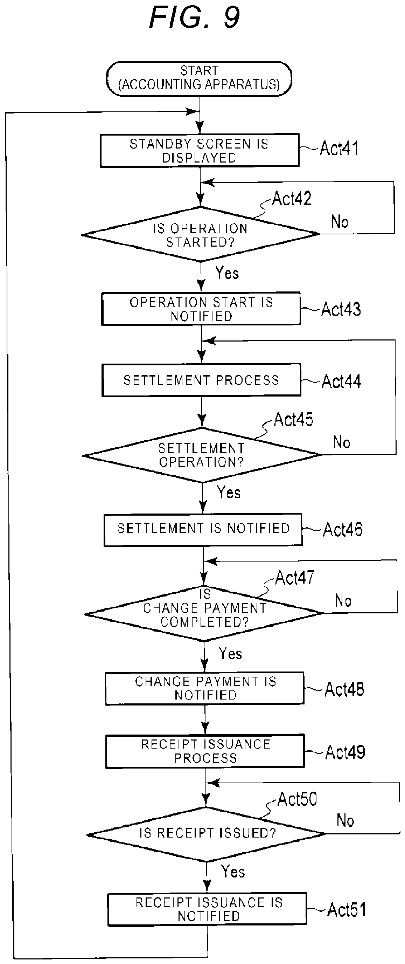

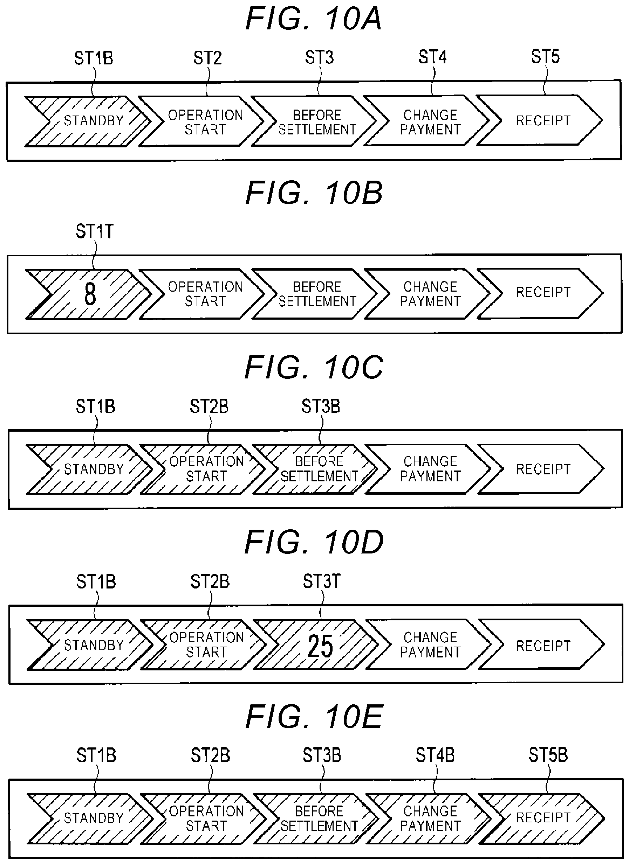

FIGS. 7 and 8 are flowcharts for explaining a process for displaying the state transition image SC of the registration apparatus 10A in the embodiment. Here, the display of the state image 41-1 of the first state transition image SC1 corresponding to the accounting apparatus 12A1 is described as an example. FIG. 9 is a flowchart for explaining a process of the accounting apparatus 12A1. FIGs. 10A to 10E are views illustrating an example of a display form of the state image 41-1. The second state transition image SC2 and the state image 41-2 on the second state transition image SC2 corresponding to the accounting apparatus 12A2 executes substantially the same process and a detailed description thereof will be omitted.

When it is detected that a commodity code attached to a commodity has been read by the scanner 11g, the processor 11a registers or updates the information of the commodity corresponding to the commodity code in the registered commodity table. The processor 11a updates the information in the registration screen according to the content of the updated registered commodity table. Thereafter, as described above, the processor 11a sequentially adds the information of the commodity according to an acquired commodity code to the registered commodity table whenever the employee 2 performs an operation to read a commodity code with the scanner 11g.

After at least one commodity is registered, when it is detected that a subtotal button is pressed (Act 21, Yes), the processor 11a generates the transaction information for the settlement process based on the content in the registered commodity table. The transaction information includes information such as the list of the registered commodities and the total number and the total price of the purchased commodities. The processor 11a transmits the transaction information to, for example, the accounting apparatus 12A1 which executes the settlement process based on the transaction information.

The processor 11a starts measurement of a "standby" time from the transmission of the transaction information until an operation is started in the accounting apparatus 12A1 (Act 22). The processor 11a changes the display form of the figure corresponding to the processing stage of "standby" of the state image 41-1 (Act 23). That is, it displays that the processing stage in the accounting apparatus 12A1 is in the "standby" state. As the change of the display form, it is made into a form different from ordinary; for example, the display is changed to a specific color display, or the like.

FIG. 10A illustrates an operation in which a figure ST1 corresponding to the processing stage of "standby" of the state image 41-1 is changed to the display form of a figure ST1B indicating that the figure ST1 reaches the processing stage of the "standby". The figure ST1B has the display form different from figures ST2, ST3, ST4, and ST5 respectively corresponding to other processing stages of "operation start", "before settlement", "change payment", and "receipt". Therefore, it is possible to see that the processing stage of the accounting apparatus 12A1 is in "standby" by referring to the display of the state image 41-1.

On the other hand, when the processor 12a of the accounting apparatus 12A1 receives the transaction information from the registration apparatus 10A, the processor 12a displays a standby screen for receiving an operation of a shopper 4 on the touch panel 12g (Act 41). The standby screen is a screen provided with selection buttons for selecting a payment method, such as cash or credit payment.

The processor 11a of the registration apparatus 10A measures a time until an operation is started by the shopper 4, that is a time until an operation start notification is received, from the accounting apparatus 12A1 (Acts 22 to 26). The processor 11a determines whether or not the measured time elapsed from start of the "standby" time exceeds a preset value (Act 24).

When it is determined that a preset time in "standby" state has elapsed (Act 24, Yes), the processor 11a performs a warning display indicating that the "standby" time has exceeded the preset time within the state image 41-1. Here, for example, as the "standby" time, two time periods are set in advance.

As a first "standby" time, for example, an estimated time until an operation is actually started by the shopper 4 from reception of the transaction information until the settlement process is performed on the accounting apparatus 12A1 is set. That is, the estimated time (for example, 20 seconds) required for an ordinary/average shopper 4 to begin the settlement process is provided as preset value. Therefore, when the settlement operation has not started even though the first "standby" time has elapsed, it is possible to determine that the employee 2 needs to help or otherwise deal with the shopper 4 due to possible occurrence of a difficulty or the like.

As the second "standby" time, a time less than the first "standby" time is set. That is, a display start time (for example, 10 seconds) for notifying the employee 2 before the full first "standby" time has been exceeded.

When it is determined that the second "standby" time has elapsed (Act 24, Yes), the processor 11a changes to the display form that displays a countdown number or the like indicating a time until the first "standby" time will have been exceeded as a warning display (Act 25).

FIG. 10B illustrates an example of a figure ST1T displaying a remaining time (8 seconds) until the first "standby" time is reached in the figure ST1 corresponding to the processing stage of the "standby" of the state image 41-1. The processor 11a changes a number indicating the remaining time displayed in the figure ST1T with the time elapsed. In the state image 41-1, the display of the figure ST1 illustrated in FIG. 10A is changed to the figure ST1T so that the employee 2 can monitor that the shopper 4 does not begin immediately and can continuously recognize the remaining time up to the estimated time at which the operation would started if all was normal and ordinary. Therefore, the employee 2 can begin to pay attention to the shopper 4 who does not start the settlement operation, and can begin to prepare to deal with this shopper 4.

When it is determined that the first "standby" time has elapsed (Act 24, Yes), the processor 11a changes the figure ST1 to the warning display indicating that the first "standby" time has been met as a warning display (Act 25). For example, since there is a possibility that the shopper 4 cannot start the settlement operation due to occurrence of trouble or the like, in order to urgently prompt action to deal with the potential trouble, the figure ST1 is changed to a display form which can be particularly recognized by the employee 2, for example, the figure ST1 is blink-displayed in red. Therefore, the employee 2 can immediately respond to the shopper 4 having trouble or the like.

On the other hand, when the processor 12a of the accounting apparatus 12A1 detects an operation by the shopper 4 who selects the payment method with respect to the standby screen (Act 42, Yes), an operation start notification is transmitted to the registration apparatus 10A (Act 43). When the processor 11a of the registration apparatus 10A receives the operation start notification from the accounting apparatus 12A1 (Act 26, Yes), the processor 11a changes the display form of a figure ST2 corresponding to the processing stage of the "operation start" of the state image 41-1, and displays so as to indicate that the processing stage in the accounting apparatus 12A1 is in the "operation start" state (Act 27). When the warning display is performed for the figure ST1, similar to the figure ST2, the figure ST1 is changed to a display form indicating that it reaches the ordinary processing stage.

The processor 11a starts measurement of the "before settlement" time until the settlement operation is performed in the accounting apparatus 12A1 from the start of the operation (Act 28). The processor 11a changes the display form of a figure ST3 corresponding to the processing stage of the "before settlement" of the state image 41-1, and displays so as to indicate that the processing stage in the accounting apparatus 12A1 is in the "before settlement" state (Act 29).

FIG. 10C illustrates a state where the display form up to the figure ST3 corresponding to the processing stage of the "before settlement" of the state image 41-1 is changed. As illustrated in FIG. 10C, in the state image 41-1, figures ST1B, ST2B, and ST3B, which are changed to the display forms respectively indicating that it reaches the processing stages of "standby", "operation start", and "before settlement", to the processing stage of the "before settlement", are displayed.

The processor 11a of the registration apparatus 10A determines whether or not the measured time exceeds the preset "before settlement" time while measuring the time from the start of the operation by the shopper 4 to the settlement operation in the accounting apparatus 12A1 (Act 30).

When it is determined that the "standby" time has elapsed (Act 30, Yes), the processor 11a performs the warning display indicating that the "before settlement" time has elapsed in the state image 41-1. Here, for example, as the "before settlement" time, similar to the "standby" time, two time periods are set in advance.

As the first "before settlement" time, for example, an estimated time until the completion of the payment operation after the accounting apparatus 12A1 receives of the transaction information is set. That is, the estimated time (for example, 40 seconds) required for the settlement operation to be normally completed if it is the shopper 4 is ordinary or average is set. Therefore, when the settlement operation is not completed even though the first "before settlement" time has elapsed, it is possible to determine that the employee 2 needs to deal with the shopper 4 due to occurrence of a trouble or the like.

As the second "before settlement" time, a time shorter than the first "before settlement" time is set. That is, a display start time (for example, 30 seconds) is set for notifying the employee 2 before the first "before settlement" time is reached.

When it is determined that the second "before settlement" time has elapsed (Act 30, Yes), the processor 11a changes to the display form that displays a countdown number indicating a time until the first "before settlement" time is reached as the warning display (Act 31).

FIG. 10D illustrates an example of a figure ST3T displaying a remaining time (25 seconds) until it reaches the first "before settlement" time in the figure ST3B corresponding to the processing stage of the "before settlement" of the state image 41-1. The processor 11a changes a number indicating the remaining time displayed in the figure ST3T with the time elapsed. In the state image 41-1, the display of the figure ST3B illustrated in FIG. 10C is changed to the figure ST3T so that the employee 2 can see that the shopper 4 has not yet completed the settlement operation and can continuously recognize the remaining time up to the estimated time at which the settlement operation is completed if it is ordinary. Therefore, the employee 2 can pay attention to the shopper 4 who cannot complete the settlement operation (including, for example, a deposit operation, an credit card inserting operation, or the like), and can prepare to deal with the shopper 4.

When it is determined that the first "before settlement" time elapses (Act 30, Yes), the processor 11a changes the figure ST3 to the form of the warning display indicating it reaches the first "before settlement" time as the warning display (Act 31). For example, since there is a possibility that the shopper 4 may not able to complete the settlement operation because a method of the settlement operation is unknown, in order to urgently prompt action to deal with this, the figure ST3 is changed to a display form which can be particularly recognized by the employee 2, for example, the figure ST3 is blink-displayed in red. Therefore, the employee 2 can immediately respond to the shopper 4.

On the other hand, when operations (e.g., the depositing of money or the credit card insertion) necessary for the settlement process are performed (Act 44) and the settlement operation start is detected (Act 45, Yes), the processor 12a of the accounting apparatus 12A1 transmits the settlement notification to the registration apparatus 10A (Act 46). When the processor 11a of the registration apparatus 10A receives the settlement notification from the accounting apparatus 12A1 (Act 32, Yes), the processor 11a changes the display form of a figure ST4 corresponding to the processing stage of the "change payment" of the state image 41-1, and displays so as to indicate that the processing stage in the accounting apparatus 12A1 is in the "change payment" state (Act 33). When the warning display is performed for the figure ST3, similar to the figure ST4, the figure ST3 is changed to a display form indicating that it reaches the ordinary processing stage.

When the change payment process is completed, or when there is no change to return, such as when the payment is performed by a credit card (Act 47, Yes), the processor 12a of the accounting apparatus 12A1 transmits the change payment notification to the registration apparatus 10A (Act 48). When the change payment notification is received from the accounting apparatus 12A1 (Act 34, Yes), the processor 11a of the registration apparatus 10A changes the display form of the figure ST5 corresponding to the processing stage of the "receipt" of the state image 41-1 and displays information so as to indicate that the processing stage in the accounting apparatus 12A1 has reached the "receipt" issuance (Act 35).

FIG. 10E illustrates a state of changing the display form to the figure ST5 corresponding to the processing stage of the "receipt" of the state image 41-1. As illustrated in FIG. 10E, in the state image 41-1, the figures ST1B to ST5B, which are changed to the display forms indicating that it reaches all the processing stages to the processing stage of the "receipt", are displayed.

The processor 12a of the accounting apparatus 12A1 issues the receipt by the printer 12h after the change payment is completed (Act 49) and when the receipt issuance is completed (Act 50, Yes), transmits the receipt issuance notification to the registration apparatus 10A (Act 51). When the receipt issuance notification is received from the accounting apparatus 12A1 (Act 36, Yes), the processor 11a of the registration apparatus 10A clears the display of the state image 41-1 and returns the procedure to the initial state (Act 37). That is, it changes to the display form indicating that the settlement process is completed in the accounting apparatus 12A1.

In this manner, in the registration apparatus 10A in the embodiment, the entire process executed by the accounting apparatus 12A1 is divided into a plurality of stages and is displayed as the state image 41-1 of the first state transition image SC1, and the display of the processing stage according to the processing status can be changed. That is, in the state image 41-1, the processing stage reached by the state transition is displayed in accordance with the transition of the process in the accounting apparatus 12A1 so that it is possible to grasp intuitively and easily the current processing stage in the entire process.

In the above description, a case where processing is executed in the registration apparatus 10A is described, but the same processing can be executed in the registration apparatus 10B or the server 13.

The process described in the above-described example embodiment can be provided to various apparatuses by being written in, for example, a recording medium such as a magnetic disk (a flexible disk, a hard disk, or the like), an optical disk (a CD-ROM, a DVD or the like), and a semiconductor memory as a program that can be executed by a computer. Furthermore, the program can be transmitted via a communication network and can thereby be provided to various apparatuses. A computer reads a program recorded on a recording medium or receives a program via a communication network, and the operation and configuration of such a computer is controlled and/or changed by the program to execute the above-described processing.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A register system comprising:
a display screen;
a communication interface connectable to a settlement processing apparatus at which a payment process associated with a commodity sales transaction can be performed; and
a processor configured to:
receive data via the communication interface from the settlement processing apparatus indicating a current stage of the payment process on the settlement processing apparatus as one of a plurality of predetermined possible stages in the payment process;
control the display screen to display a settlement process state image for indicating the current stage of the payment process on the settlement processing apparatus, the settlement process state image including image regions corresponding to each of the predetermined possible stages in the payment process; and
change a display format on the display screen of an image region corresponding to one of the predetermined possible stages in the payment process matching the current stage of the payment process according to the received data from the settlement processing apparatus.

2. The system according to claim 1, further comprising:
a commodity scanner for registering items in the commodity sales transaction; and
a clerk data input unit including a keyboard and a touch panel, the clerk data input unit being configured to permit a sales clerk to input information related to the commodity sales transaction.

3. The system according to claim 1 or 2, wherein the processor is further configured to track an elapsed time from a beginning of at least one of the predetermined possible stages in the payment process according to data received from the settlement processing apparatus and to display the elapsed time on the display screen.

4. The system according to claim 3, wherein the processor is further configured to control the display screen to display a warning image when the elapsed time exceeds a threshold value.

5. The system according to any one of claims 1 to 4, wherein
the communication interface is connected to a plurality of settlement processing apparatuses,
the processor is configured to receive data, via the communication interface, from each settlement processing apparatus in the plurality, and
the processor is configured to control the display screen to display a settlement process state image corresponding to each settlement processing apparatus.

6. The system according to any one of claims 1 to 5, wherein the processor is further configured to:
receive inventory state data from the settlement processing apparatus, the inventory state data indicating at least one of a remaining amount of a banknote denomination within the settlement processing apparatus, a remaining amount of a coin denomination within the settlement processing apparatus, and a remaining amount of paper in a receipt printer of the settlement processing apparatus, and
control the display screen to display a screen image according to the inventory state data along with the settlement process state image for the settlement processing apparatus.

7. A retail store checkout system, comprising:
a sales registration apparatus including a commodity scanner for registering items in a sales transaction, a display screen for displaying information associated with the sales transaction to sales clerk, and a communication interface; and
a plurality of settlement processing apparatuses connected to the sales registration apparatus via the communication interface, each settlement processing apparatus being configured to receive sales transaction data from the sales registration apparatus and process payments from a customer for settlement of the sales transaction, wherein
the sales registration apparatus is configured to:
receive data via the communication interface from each settlement processing apparatus, the data indicating a current stage of the payment process on the settlement processing apparatus as one of a plurality of predetermined possible stages in the payment process;
control the display screen to display a settlement process state image for each settlement processing apparatus, the settlement process state image for each settlement processing apparatus indicating the current stage of the payment process on the respective settlement processing apparatus, each settlement process state image including image regions corresponding to each of the predetermined possible stages in the payment process; and
change a display format on the display screen of an image region corresponding to one of the predetermined possible stages in the payment process matching the current stage of the payment process according to the received data from each settlement processing apparatus.

8. The system according to claim 7, wherein the sales registration apparatus is further configured to track an elapsed time from a beginning of at least one of the predetermined possible stages in the payment process according to data received from the settlement processing apparatus and to display the elapsed time on the display screen.

9. The system according to claim 8, wherein the sales registration apparatus is further configured to control the display screen to display a warning image when the elapsed time exceeds a threshold value.

10. The system according to any one of claims 7 to 9, wherein the sales registration apparatus is further configured to:
receive inventory state data from each settlement processing apparatus, the inventory state data indicating at least one of a remaining amount of a banknote denomination within the settlement processing apparatus, a remaining amount of a coin denomination within the settlement processing apparatus, and a remaining amount of paper in a receipt printer of the settlement processing apparatus, and
control the display screen to display a screen image according to the inventory state data along with the settlement process state image for each settlement processing apparatus.

11. A register machine for a retail store checkout system that includes a plurality of customer-operated settlement processing apparatuses, the sales registration apparatus comprising:
a commodity scanner for registering items in a commodity sales transaction;
a clerk data input unit including a keyboard and a touch panel, the clerk data input unit being configured to permit a sales clerk to input information related to the commodity sales transaction;
a display screen for displaying information to the sales clerk that is associated with the commodity sales transaction;
a communication interface connected to a plurality of settlement processing apparatuses at which a payment process associated with the commodity sales transaction can be performed by a customer; and
a processor configured to:
receive data, via the communication interface, from each settlement processing apparatus, the data indicating a current stage of the payment process on the settlement processing apparatus as one of a plurality of predetermined possible stages in the payment process;
control the display screen to display a settlement process state image for indicating the current stage of the payment process on the settlement processing apparatus, the settlement process state image including image regions corresponding to each of the predetermined possible stages in the payment process; and
change a display format on the display screen of an image region corresponding to one of the predetermined possible stages in the payment process matching the current stage of the payment process according to the received data from the settlement processing apparatus.

12. The register machine according to claim 11, wherein the processor is further configured to track an elapsed time from a beginning of at least one of the predetermined possible stages in the payment process according to data received from the settlement processing apparatus and to display the elapsed time on the display screen.

13. The register machine according to claim 12, wherein the processor is further configured to control the display screen to display a warning image when the elapsed time exceeds a threshold value.

14. A method for displaying a stage of a payment process on a settlement processing apparatus in a registration apparatus comprising steps of:
detecting, by the registration apparatus, that a subtotal button on the settlement processing apparatus is pressed,
transmitting, by the registration apparatus, transaction information to the settlement processing apparatus,
starting, by the registration apparatus, a measurement of a standby time from the transmission of the transaction information until an operation is started in the settlement apparatus, and
displaying a figure, on the registration apparatus, to display that the stage is in the standby state until the standby time exceed a preset value.

15. A recording medium storing a program causing a computer to execute the method according to claim 14.
